# EUROPÄISCHE PATENTSCHRIFT

(11) **EP 3 023 945 B1**
(45) Veröffentlichungstag und Bekanntmachung des Hinweises auf die Patenterteilung: **01.04.2020**
(21) Anmeldenummer: 15450040.9
(22) Anmeldetag: 19.11.2015
(51) Int. Cl.: G07C 9/00, G01S 11/08, G01S 11/16

(54) **VERFAHREN UND VORRICHTUNG ZUR ENTFERNUNGSERMITTLUNG BEI DER ZUTRITTSKONTROLLE**
METHOD AND DEVICE FOR DISTANCE DETERMINATION DURING ACCESS CONTROL
PROCÉDÉ ET DISPOSITIF DE DÉTERMINATION DE LA DISTANCE POUR UN CONTRÔLE D'ACCÈS

(30) Priorität: 20.11.2014 AT 8402014
(43) Veröffentlichungstag der Anmeldung: 25.05.2016
(73) Patentinhaber: EVVA Sicherheitstechnologie GmbH, 1120 Wien (AT)
(72) Erfinder: Enne, Reinhard J., A-1120 Wien (AT); Zeller, Andreas, A-2352 Gumpoldskirchen (AT)
(74) Vertreter: Keschmann, Marc

(56) Entgegenhaltungen:
- EP-A1- 1 705 498
- EP-A1- 2 266 248
- WO-A1-03/081516
- DE-A1- 19 957 536
- DE-T2- 60 113 762
- GB-A- 2 510 548
- NISSANKA B PRIYANTHA ET AL: "The Cricket location-support system", PROCEEDINGS OF THE SIXTH ANNUAL ACM/IEEE INTERNATIONAL CONFERENCE ON MOBILE COMPUTING AND NETWORKING : AUGUST 6 - 11, 2000, BOSTON, MASSACHUSETTS, NEW YORK, NY : ASSOC. FOR COMPUTER MACHINERY, 2 PENN PLAZA, SUITE 701 NEW YORK NY 10121-0701 USA, 1 August 2000 (2000-08-01), pages 32-43, XP058322028, DOI: 10.1145/345910.345917 ISBN: 978-1-58113-197-0

## Beschreibung

Die Erfindung betrifft ein Verfahren zur Ermittlung der räumlichen Entfernung zwischen einer Zutrittskontrollvorrichtung und einem Identmedium.

Weiters betrifft die Erfindung ein Verfahren zur Zutrittskontrolle insbesondere in Gebäuden, bei dem eine bidirektionale Datenübermittlung zwischen einem Identmedium und einer Zutrittskontrollvorrichtung stattfindet, um die Zutrittsberechtigung des Identmediums in Bezug auf die Zutrittskontrollvorrichtung zu überprüfen, wobei in Abhängigkeit von der festgestellten Zutrittsberechtigung der Zutritt freigeben oder gesperrt wird, und eine Vorrichtung zur Durchführung dieses Verfahrens.

An moderne Schließanlagen werden vielfältige Anforderungen gestellt. Schließanlagen kommen meist in größeren Gebäuden zum Einsatz, in denen der Zutritt zu einer Vielzahl von Räumen oder Gebäudeabschnitten individuell kontrolliert werden soll. Um dem Bedürfnis nach häufig wechselnden Berechtigungen Rechnung zu tragen, werden Schließanlagen häufig mit Zutrittskontrollvorrichtungen ausgestattet, die elektronische Berechtigungsabfragemittel aufweisen. Die Berechtigungsinformationen sind auf elektronischen Identmedien gespeichert. Die Berechtigungsinformationen liegen beispielsweise als elektronischer Code vor, der von den Leseeinheiten der Zutrittskontrollvorrichtungen elektronisch ausgelesen und hinsichtlich der Zutrittsberechtigung ausgewertet werden kann. Dabei ist nicht zwingend erforderlich, dass der elektronische Code tatsächlich übertragen wird. Vielmehr kann die Zutrittsberechtigung auch mittels eines Authentifizierungs- und/oder Identifizierungsprotokolls zwischen der Zutrittskontrollvorrichtung und dem Identmedium ermittelt werden, d.h. mit kryptographische Verfahren, mit denen ohne Übertragung der sensiblen Codes festgestellt werden kann, ob das Identmedium und die Zutrittskontrollvorrichtung über dasselbe Geheimnis verfügen, welches einer Zutrittsberechtigung entspricht.

Unter Zutrittskontrollvorrichtungen oder Schließeinheiten sind im Rahmen der Erfindung elektrische, elektronische oder mechatronische Schließeinheiten, insbesondere Schlösser, zu verstehen. Schließeinheiten können hierbei verschiedene Komponenten umfassen, wie z.B. Leseeinrichtungen für Identmedien, eine Schließelektronik und dgl. Zutrittskontrollvorrichtungen bzw. Schließeinheiten dienen dabei insbesondere dazu, den Zutritt zu Räumen in Abhängigkeit von der Zutrittsberechtigung zu versperren oder freizugeben und sind dementsprechend zum Einbau in Türen, Fenstern und dgl. vorgesehen. Unter mechanischen Schließeinheiten sind z.B. Zylinderschlösser zu verstehen. Mechatronische Schließeinheiten sind z.B. elektromotorisch angetriebene Sperreinrichtungen, insbesondere E-Zylinder. Elektrische Schließeinheiten sind z.B. elektrische Türöffner.

Unter Identmedien werden elektronische Identifikationsmedien oder Vorrichtungen verstanden, die einen elektronischen Code bzw. Berechtigungsinformationen gespeichert haben, z.B. in der Form von Karten, Schlüsselanhängern und Kombinationen aus mechanischen und elektronischen Schlüsseln. Elektronische Vorrichtungen, die einen elektronischen Code gespeichert haben, können z.B. als tragbares mobiles Telekommunikationsgerät, insbesondere als Mobiltelefon, Smartphone, Personal Digital Assistant (PDA) oder dgl. ausgebildet sein. Als Idehtmedium im Sinne der Erfindung kann auch eine Anordnung von zwei Einheiten, z.B. ein Identifikationsmedium und ein tragbares mobiles Telekommunikationsgerät, verstanden werden, die miteinander in Kommunikationsverbindung stehen und von einem Benutzer gemeinsam mit sich getragen werden. Das Identmedium kann ausgebildet sein, um die Datenübermittlung zur Zutrittskontrollvorrichtung entweder kontaktbehaftet oder drahtlos durchzuführen.

Unter Berechtigungsinformationen sind z.B. Identifikations- bzw. Zugangscodes und/oder Zutrittsbedingungen wie z.B. berechtigte Zutrittszeit, berechtigter Zutrittstag, berechtigtes Zutrittsdatum eines Benutzers und dgl. zu verstehen. Insbesondere werden die Berechtigungsinformationen von einem geheimen zutrittskontrollvorrichtungsindividuellen Schlüssel, d.h. einer die Zutrittskontrollvorrichtung identifizierenden Kennung, und optional einer zeitlichen Berechtigungseinschränkung gebildet.

Der Begriff Datenübermittlung umfasst im Rahmen der Erfindung jegliche Art der Datenkommunikation zwischen einem Identmedium und einer Zutrittskontrollvorrichtung, z.B. mittels elektromagnetischen Wellen, induktiver oder kapazitiver Kopplung oder mittels Schallwellen.

Abhängig von der drahtlosen Übertragungstechnologie kann die Zutrittsberechtigungsüberprüfung über mehr oder weniger größere Entfernungen zwischen Identmedium und Zutrittskontrollvorrichtung erfolgen. Insbesondere die Datenübermittlung über elektromagnetische Wellen bzw. Funkwellen funktioniert über relativ große Entfernungen. Dies hat zwar einen größeren Benutzungskomfort zur Folge, weil zum Öffnen einer Tür nicht bis unmittelbar an die zu öffnende Tür herangetreten werden muss, ist jedoch mit dem Nachteil verbunden, dass unbeabsichtigt auch andere Türen, für welche ebenfalls eine Zutrittsberechtigung vorliegt, mitgeöffnet werden. Dies ist insbesondere dann problematisch, wenn mehrere Türen mit geringem Abstand voneinander angeordnet sind, wie z.B. in einem Flur bzw. Gang.

Bei der kapazitiven Datenübertragung zwischen dem Identmedium und der Zutrittskontrollvorrichtung besteht ein ähnliches Problem. Nachteilig bei der kapazitiven Übertragung der Daten im Zuge eines Sperrvorganges ist, dass die bei der kapazitiven Kopplung entstehenden Verschiebungsströme auf Grund von elektrisch leitenden Strukturen z.B. im Bereich einer Tür verschleppt werden können, sodass die Ausbreitung eines Signals nicht immer genau kontrolliert werden kann. Es kann daher ohne weitere Vorkehrungen der Fall eintreten, dass vom Schlüssel ausgesendete Identifikationsdaten nicht nur der Zutrittskontrollvorrichtung der gewünschten Tür, sondern auch jener der benachbarten Tür zur Verfügung stehen, sodass ein Sperrvorgang möglicherweise bei der falschen Tür ausgelöst wird.

Bei der kapazitiven Datenübertragung besteht weiters die sogenannte "Man-in-the-Middle"-Problematik, bei der die kapazitive Übermittlung von Daten an die Zutrittskontrollvorrichtung nicht allein über diejenige Person erfolgt, die den elektronischen Schlüssel mit sich führt, sondern missbräuchlich über eine zwischen der genannten Person und der Zutrittskontrollvorrichtung stehende Person. Der "Man-in-the-Middle" würde somit selbst keinen berechtigten Schlüssel mit sich führen müssen, um sich einen Zutritt zu verschaffen, sondern könnte mit einer Hand die Zutrittskontrollvorrichtung und mit der anderen Hand die den berechtigten Schlüssel mit sich führende Person berühren.

WO03081516 beschreibt ein Zutrittskontrollverfahren gemäß der Präambel von Anspruch 1, welches ein elektromagnetisches Laufzeitmesssignal benutzt, dessen Laufzeit mit Hilfe von Uhren in der Zutrittskontrollvorrichtung und im Identmedium gemessen werden kann.

Der Erfindung liegt daher die Aufgabe zugrunde, ein Zutrittskontrollverfahren und eine Zutrittskontrollvorrichtung der eingangs genannten Art hinsichtlich der oben genannten Nachteile zu verbessern.

Zur Lösung dieser Aufgabe betrifft die Erfindung gemäß einem ersten Aspekt ein Verfahren zur Ermittlung der räumlichen Entfernung zwischen einer Zutrittskontrollvorrichtung und einem Identmedium gemäß unabhängigem Anspruch 1.

Die Ermittlung des räumlichen Abstands des Identmediums relativ zur Zutrittskontrollvorrichtung soll sicherstellen, dass diejenige Person, von deren Identmedium die Zutrittskontrollvorrichtung Daten erhält, sich tatsächlich in ausreichender Nähe der Zutrittskontrollvorrichtung befindet.

Zur Ermittlung der Entfernung wird erfindungsgemäß ein Laufzeitmesssignal von der Zutrittskontrollvorrichtung zum Identmedium oder vom Identmedium an die Zutrittskontrollvorrichtung drahtlos gesendet. Die Entfernung wird unter Verwendung der Laufzeit des Laufzeitmesssignals und der bekannten Signalausbreitungsgeschwindigkeit errechnet.

Die Signallaufzeit kann hierbei in unterschiedlicher Weise ermittelt werden. Gemäß einer ersten Ausbildung der Erfindung werden die Uhren im Sender und im Empfänger synchronisiert, sodass als Referenzzeit die Uhrzeit des Aussendens des Laufzeitmesssignals herangezogen werden kann. Die Laufzeit wird beispielsweise als Differenz zwischen der Empfangszeit und der Sendezeit ermittelt. Damit die Errechnung der Signallaufzeit im Empfänger möglich ist, muss dort die Sendeuhrzeit bekannt sein. Zu diesem Zweck sieht eine bevorzugte Weiterbildung vor, dass die Sendeuhrzeit vom Sender zum Empfänger übermittelt wird. Wenn die Errechnung der Signallaufzeit im Sender erfolgen soll, kann umgekehrt die Empfangszeit vom Empfänger zum Sender übermittelt werden.

Alternativ kann im Falle von synchronisierten Uhrzeiten auch so vorgegangen werden, dass im Sender und im Empfänger wenigstens eine vorgegebene, übereinstimmende Uhrzeit als Sendeuhrzeit gespeichert wird, zu welcher der Sender das Laufzeitmesssignal aussendet. In diesem Fall erübrigt sich die Übermittlung der Sendezeit oder der Empfangszeit zur jeweils anderen Einheit, da wenigstens eine vorgegebene Sendezeit in beiden Einheiten von vornherein bekannt ist. Beispielsweise kann im Sender und im Empfänger ein übereinstimmendes Zeitraster mit Uhrzeiten gespeichert sein, zu welchen das Laufzeitmesssignal ausgesendet wird. Die Zeitabstände zwischen den im Zeitraster gespeicherten Uhrzeiten müssen hierbei so gewählt sein, dass es im Empfänger gelingt, die Empfangsuhrzeit eines Laufzeitmesssignals unter Berücksichtigung der bekannten Signalausbreitungsgeschwindigkeit und eines möglichen Entfernungsbereichs einer gespeicherten Sendezeit zuzuordnen. Die Laufzeit kann dann wiederum als Differenz zwischen der Empfangsuhrzeit und der Sendeuhrzeit errechnet werden.

Die Synchronisierung der Uhrzeiten umfasst das Übermitteln eines Synchronisierungssignals zwischen der Zutrittskontrollvorrichtung und dem Identmedium. Dabei ist naturgemäß zu berücksichtigen, dass das Synchronisierungssignal selbst eine gewisse Signallaufzeit aufweist, sodass die Synchronisierung eine vom Abstand der Zutrittskontrollvorrichtung und dem Identmedium zum Zeitpunkt des Synchronisierung abhängige Unge**nauigkeit** aufweist. Das Synchronisierungssignal enthält hierbei eine Information über die den Zeitpunkt des Absendens des Synchronisierungssignals möglichst genau wiedergebende Uhrzeit des Senders.

Die erste Ausbildung der Erfindung sieht vor, dass das Synchronisierungssignal mit einer Signalausbreitungsgeschwindigkeit gesendet wird, die mindestens dem 100-fachen, vorzugsweise mindestens dem 1000-fachen der Signalausbreitungsgeschwindigkeit des Laufzeitmesssignals entspricht. Dadurch wirkt sich die oben beschriebene Ungenauigkeit in geringerem Ausmaß aus. Je größer der Unterschied der Signalausbreitungsgeschwindigkeiten ist, desto weniger kommt die Ungenauigkeit im Verhältnis zu der langen Laufzeit des Laufzeitmesssignals zum Tragen. Die Ungenauigkeit kann in Kauf genommen werden oder bei der Berechnung der räumlichen Entfernung unter Berücksichtigung des Signalausbreitungsgeschwindigkeitsunterschieds kompensiert werden.

Gemäß einer zweiten Ausbildung der Erfindung kann auf die Synchronisierung der Uhren verzichtet werden, wobei so vorgegangen wird, dass der Sender das Laufzeitmesssignal und ein Referenzsignal gleichzeitig oder in einem vorbestimmten Zeitabstand aussendet, wobei das Referenzsignal mit einer Signalausbreitungsgeschwindigkeit gesendet wird, die mindestens dem 100-fachen, vorzugsweise mindestens dem 1000-fachen der Signalausbreitungsgeschwindigkeit des Laufzeitmesssignals entspricht, und dass die Empfangszeit des Referenzsignals im Empfänger als Referenzzeit herangezogen wird. Bei dieser Vorgehensweise kann die Zeitdifferenz zwischen dem Empfangen des schnellen Referenzsignals und dem Empfangen des langsamen Laufzeitmesssignals unter Berücksichtigung der bekannten Signalausbreitungsgeschwindigkeiten herangezogen werden, um die räumliche Entfernung zu errechnen.

Besonders bevorzugt wird das Laufzeitmesssignal mit einer Signalausbreitungsgeschwindigkeit von < 500 m/s, vorzugsweise < 400 m/s, insbesondere über Schallwellen ausgesendet. Bei Schallwellen kann es sich um Ultraschall, Infraschall oder Schall im menschlich hörbaren Bereich handeln. Ultraschallsender und -empfänger sind kostengünstig verfügbar und können mit herkömmlichen Mikrokontrollern in einfacher Weise angesteuert werden. Ein weiterer Vorteil von Wellen mit solch niedriger Ausbreitungsgeschwindigkeit wie Schallwellen ist, dass die sich daraus ergebenden relativ großen Zeitdifferenzen zwischen Sendeuhrzeit und Empfangsuhrzeit mit Hilfe herkömmlicher Mikrokontroller in einfacher Weise erfasst werden können.

Bevorzugt wird das Synchronisierungssignal bzw. das Referenzsignal mit einer Signalausbreitungsgeschwindigkeit von > 100.000 km/s, insbesondere über elektromagnetische Wellen oder mittels induktiver oder kapazitiver Datenübertragung übermittelt.

Zur Ermittlung einer Signallaufzeit und der sich daraus ergebenden räumlichen Entfernung müssen mit dem Laufzeitmesssignal keine Informationen übermittelt werden. Vielmehr reicht es aus, wenn das Laufzeitmesssignal, das Synchronisierungssignal und/oder das Referenzsignal als Trägersignal mit einer vorbestimmten Frequenz übermittelt wird. Das Detektieren einer vom Sender ausgesendeten Trägerwelle auf der vorbestimmten Frequenz ist hierbei hinreichend, um die Empfangsuhrzeit festzustellen. Um Störsicherheit zu erhöhen, kann so vorgegangen werden, dass das Signal über wenigstens zwei unterschiedliche Trägerfrequenzen übermittelt wird.

Erfindungsgemäß wird das Synchronisierungssignal bzw. das Referenzsignal als Trägersignal mit aufmodulierten Daten, wie z.B. einer Kennung, Identifikationsdaten, Ereignisdaten und/oder Batteriestatusdaten, übermittelt. Zusätzlich kann auch das Laufzeitmesssignal als Trägersignal mit aufmodulierten Daten übermittelt werden. Besonders bevorzugt wird die Sendeuhrzeit des betreffenden Laufzeitmesssignals aufmoduliert. Eine weiter bevorzugte Ausbildung sieht vor, dass eine fortlaufende Kennung, insbesondere eine fortlaufende Nummer auf das Laufzeitmesssignal aufmoduliert wird. Auf diese Art und Weise gelingt es, Sendeuhrzeit und Empfangsuhrzeit ein- und desselben Laufzeitmesssignals einander zuzuordnen.

In einer weiteren bevorzugten Ausführung kann das Signal im Rahmen eines kryptographischen Authentifizierungs- und/oder Identifizierungsprotokolls übertragen werden. Damit können sich Sender und/oder Empfänger im Rahmen der Übertragung des Laufzeitmesssignals, Synchronisierungssignals und/oder Referenzsignals zum Beispiel gegenüber dem Kommunikationspartner authentifizieren.

Zur Lösung der Aufgabe betrifft die Erfindung gemäß einem zweiten Aspekt ein Verfahren zur Zutrittskontrolle insbesondere in Gebäuden, bei dem eine bidirektionale Datenübermittlung zwischen einem Identmedium und einer Zutrittskontrollvorrichtung stattfindet, um die Zutrittsberechtigung des Identmediums in Bezug auf die Zutrittskontrollvorrichtung zu überprüfen, wobei in Abhängigkeit von der festgestellten Zutrittsberechtigung der Zutritt freigegeben oder gesperrt wird, dadurch gekennzeichnet, dass die räumliche Entfernung zwischen der Zutrittskontrollvorrichtung und dem Identmedium ermittelt und mit einem vorgegebenen Grenzwert verglichen wird und der Zutritt nur dann freigegeben wird, wenn die ermittelte räumliche Entfernung unter dem Grenzwert liegt. Die Ermittlung der räumlichen Entfernung erfolgt hierbei bevorzugt mit dem Verfahren gemäß dem ersten Aspekt der Erfindung.

Gemäß einer bevorzugten Weiterbildung umfasst die Datenübermittlung die Übermittlung von Identifikationsdaten vom Identmedium an die Zutrittskontrollvorrichtung, wobei die Identifikationsdaten in der Zutrittskontrollvorrichtung zur Feststellung der Zutrittsberechtigung ausgewertet werden.

Insbesondere umfasst die Datenübermittlung die Durchführung eines vorgegebenen Authentifizierungs- und/oder Identifizierungsprotokolls, um die Gültigkeit der Kommunikationspartner und die Zutrittsberechtigung des Identmediums zu überprüfen. Die Authentifizierung kann eine "Challenge-Response"-Authentifizierung umfassen. Grundsätzlich kann die für das Authentifizierungs- und/oder Identifizierungsprotokoll erforderliche bidirektionale Datenübertragung über beliebige Nah- oder Fernfeldkommunikationswege erfolgen. Beispielsweise können die Daten über ein elektromagnetisches Feld, also per Funk übermittelt werden. Bevorzugt ist jedoch vorgesehen, dass die Durchführung des Authentifizierungs- und/oder Identifizierungsprotokolls zumindest teilweise über eine kapazitive Kopplung zwischen dem Identmedium und der Zutrittskontrollvorrichtung erfolgt, d.h. also über ein im Wesentliches elektrisches Feld. Gemäß einem weiteren Aspekt der Erfindung ist eine Vorrichtung gemäß Anspruch 11 vorgesehen.

Eine bevorzugte Ausbildung sieht vor, dass die Steuerschaltung mit der Auswerteschaltung der Zutrittskontrollvorrichtung zusammenwirkt, um die ermittelte räumliche Entfernung mit einem vorgegebenen Grenzwert zu vergleichen und den Zutritt nur dann freizugeben, wenn die ermittelte räumliche Entfernung unter dem Grenzwert liegt.

Zur Synchronisierung der Uhren ist bevorzugt vorgesehen, dass die Steuerschaltung mit der Uhreneinheit und der Sende-/Empfangseinrichtung des Senders zusammenwirkt, um die Sendeuhrzeit vom Sender zum Empfänger zu übermitteln.

Alternativ kann die Steuerschaltung des Senders und des Empfängers jeweils einen Speicher umfassen, um im Sender und im Empfänger wenigstens eine vorgegebene, übereinstimmende Uhrzeit als Sendeuhrzeit zu speichern, und die Steuerschaltung mit der Sende-/Empfangseinrichtung zusammenwirkt, um das Laufzeitmesssignal zu der gespeicherten Sendeuhrzeit auszusenden.

Bevorzugt ist die Sende-/Empfangseinrichtung des Senders ausgebildet, um das Laufzeitmesssignal mit einer Signalausbreitungsgeschwindigkeit von < 500 m/s, vorzugsweise < 400 m/s, insbesondere über Schallwellen auszusenden.

Bevorzugt ist die Sende-/Empfangseinrichtung des Senders ausgebildet, um das Synchronisierungssignal bzw. das Referenzsignal mit einer Signalausbreitungsgeschwindigkeit von > 100.000 km/s, insbesondere über elektromagnetische Wellen oder mittels induktiver oder kapazitiver Datenübertragung zu übermitteln.

In einer bevorzugten Ausbildung, kann ein Smartphone als Identmedium oder Teil eines Identmediums eingesetzt werden. Dabei können das Mikrophon und/oder der Lautsprecher des Smartphones für das erfindungsgemäße Senden bzw. Empfangen von Laufzeitmesssignalen mit niedrigerer Ausbreitungsgeschwindigkeit eingesetzt werden. In weiteren bevorzugten Ausführungen wird eine Funkschnittstelle des Smartphones (z.B. Bluetooth, Bluetooth LE oder WLAN) für die Übertragung von Synchronisierungs- oder Referenzsignalen mit höherer Ausbreitungsgeschwindigkeit vom Smartphone zur Zutrittskontrollvorrichtung eingesetzt. Eine Ausführungsvariante sieht hierbei vor, dass die Ermittlung der Entfernung zwischen der Zutrittskontrollvorrichtung und dem Smartphone auf Grund der entsprechenden Signale im Smartphone ermittelt wird und das Smartphone die ermittelte Entfernung an die Zutrittskontrollvorrichtung oder ein mit dem Smartphone in Kommunikationsverbindung stehendes Identmedium übermittelt, wobei die Übermittlung bevorzugt über elektromagnetische Wellen oder mittels induktiver oder kapazitiver Datenübertragung erfolgt. In weiteren bevorzugten Ausführungen wird eine Softwareapplikation am Smartphone eingesetzt, welches das Senden und/oder Empfangen der Signale koordiniert.

In anderen bevorzugten Ausführungen kann das Smartphone mit einem gesonderten Identmedium (z.B. in Schlüsselanhänger- oder Kartenform) kommunizieren. Das Identmedium deckt in diesen bevorzugten Ausführungen z.B. nur die Funkkommunikation mit der Zutrittskontrollvorrichtung und die Kommunikation über eine Funkschnittstelle zum Smartphone ab. Das Smartphone deckt mit Mikrophon und/oder Lautsprecher die Kommunikation mit der langsameren Ausbreitungsgeschwindigkeit zur Zutrittskontrollvorrichtung ab. Über die Funkschnittstelle zwischen dem Identmedium und dem Smartphone können Informationen übertragen werden, welche den Ablauf zwischen dem Smartphone und dem Identmedium koordinieren. Die Identifikationsdaten können hierbei im gesonderten Identmedium und/oder im Smartphone liegen.

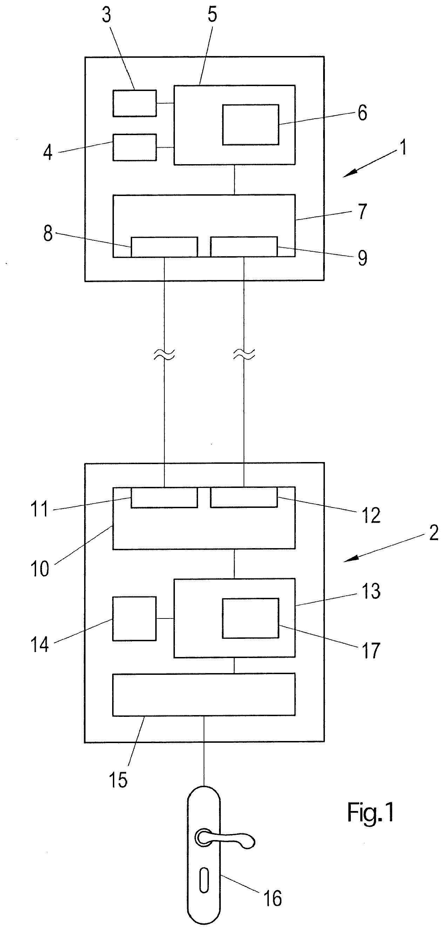

Die Erfindung wird nachfolgend anhand von in der Zeichnung schematisch dargestellten Ausführungsbeispielen näher erläutert.

In dieser ist ein Identmedium mit 1 und eine Zutrittskontrollvorrichtung mit 2 bezeichnet. Das Identmedium 1 umfasst einen Speicher 3 für elektronische Berechtigungsinformationen, insbesondere Identifikationsdaten. Weiters umfasst das Identmedium 1 eine Uhreneinheit 4. Der Speicher 3 und die Uhreneinheit 4 sind mit einer Steuerschaltung 5 verbunden. Die Steuerschaltung 5 kann hierbei in einem Mikrokontroller implementiert sein. Die Uhreneinheit 4 und/oder der Speicher müssen hierbei nicht als von der Steuerschaltung 5 baulich getrennte Einheiten ausgebildet sein, sondern können auch im Mikrokontroller der Steuerschaltung 5 ausgebildet sein. Die Steuerschaltung 5 umfasst eine Rechenschaltung 6, welche unter anderem der Verarbeitung der Uhrensignale der Uhreneinheit 4 dient. Die Steuerschaltung 5 ist mit einer Sende-/Empfangseinheit 7 verbunden, über welche die von der Steuerschaltung 5 generierten Signale ausgesendet werden und welche die von der Zutrittskontrollvorrichtung 2 empfangenen Signale an die Steuerschaltung 5 weitergibt.

Die Sende-/Empfangseinheit 7 umfasst hierbei zwei Kommunikationsschnittstellen, eine Kommunikationsschnittstelle 8 für das Senden von Ultraschallsignalen und eine Kommunikationsschnittstelle 9 für eine Funkverbindung über elektromagnetische Wellen. Die Kommunikationsschnittstelle 8 wird hierbei verwendet, um ein Laufzeitmesssignal an die Zutrittskontrollvorrichtung 2 zu senden. Die Kommunikationsschnittstelle 9 wird verwendet, um Uhrzeit-Synchronisierungssignale an die Zutrittskontrollvorrichtung 2 zu übermitteln. Weiters dient die Kommunikationsschnittstelle 9 zum bidirektionalen Datenaustausch mit der Zutrittskontrollvorrichtung 2, um die Zutrittsberechtigung des Identmediums festzustellen.

Die Zutrittskontrollvorrichtung 2 umfasst zu diesem Zweck eine Sende-/Empfangseinheit 10 mit einem Ultraschallempfänger 11 und einer Kommunikationsschnittstelle 12 für eine Funkverbindung über elektromagnetische Wellen. Weiters ist eine mit der Sende-/Empfangseinheit 10 verbundene Steuerschaltung 13 vorgesehen. Über die Sende-/Empfangseinheit 10 werden die von der Steuerschaltung 13 generierten Signale ausgesendet und die vom Identmedium 1 empfangenen Signale an die Steuerschaltung 13 weitergegeben. Die Zutrittskontrollvorrichtung 2 umfasst weiters eine Uhreneinheit 14, die mit der Steuerschaltung 13 zusammenwirkt, wobei die Signale der Uhreneinheit 14 in einer Rechenschaltung 17 verarbeitet werden. Insbesondere wird die Empfangsuhrzeit des vom Identmedium übermittelten Laufzeitmesssignals ermittelt und mit der Sendeuhrzeit des Signals verglichen, wobei aus der Differenz eine Signallaufzeit ermittelt wird. Aus der Signallaufzeit wiederum wird unter Berücksichtigung der bekannten Signalausbreitungsgeschwindigkeit des Ultraschall-Signals die räumliche Entfernung zwischen dem Identmedium 1 und der Zutrittskontrollvorrichtung 2 errechnet.

Die räumliche Entfernung wird im Zuge der Kontrolle der Zutrittsberechtigung in einer Auswerteschaltung 15 berücksichtigt, wobei die Auswerteschaltung 15 eine elektrisch ansteuerbare Schließvorrichtung 16 nur dann freigibt, wenn die räumliche Entfernung einen vorgegebenen Grenzwert unterschreitet.

## Patentansprüche

1. Verfahren zur Ermittlung der räumlichen Entfernung zwischen einer Zutrittskontrollvorrichtung und einem Identmedium umfassend die Schritte
- Aussenden eines Laufzeitmesssignals durch die Zutrittskontrollvorrichtung oder das Identmedium (Sender),
- Empfangen des Laufzeitmesssignals in der jeweils anderen Einrichtung (Empfänger),
- Erfassen der Uhrzeit des Empfangs des Laufzeitmesssignals, Errechnen einer Signallaufzeit aus der Empfangsuhrzeit und einer Referenzzeit,
- Ermitteln der räumlichen Entfernung aus der Signallaufzeit unter Berücksichtigung einer Signalausbreitungsgeschwindigkeit des Laufzeitmesssignals,
**dadurch gekennzeichnet, dass** entweder
- Uhren im Sender und im Empfänger synchronisiert werden und dass als Referenzzeit die Uhrzeit des Aussendens des Laufzeitmesssignals herangezogen wird, wobei die Synchronisierung das Übermitteln eines Synchronisierungssignals zwischen der Zutrittskontrollvorrichtung und dem Identmedium umfasst, oder
- der Sender das Laufzeitmesssignal und ein Referenzsignal gleichzeitig oder in einem vorbestimmten Zeitabstand aussendet und die Empfangszeit des Referenzsignals im Empfänger als Referenzzeit herangezogen wird,
und dass das Synchronisierungssignal bzw. das Referenzsignal mit einer Signalausbreitungsgeschwindigkeit gesendet wird, die mindestens dem 100-fachen, vorzugsweise mindestens dem 1000-fachen der Signalausbreitungsgeschwindigkeit des Laufzeitmesssignals entspricht, wobei das Synchronisierungssignal bzw. das Referenzsignal als Trägersignal mit aufmodulierten Daten, wie z.B. Identifikationsdaten, Ereignisdaten und/oder Batteriestatusdaten, übermittelt wird.

2. Verfahren nach Anspruch 1, **dadurch gekennzeichnet, dass** die Sendeuhrzeit vom Sender zum Empfänger übermittelt wird.

3. Verfahren nach Anspruch 1, **dadurch gekennzeichnet, dass** im Sender und im Empfänger wenigstens eine vorgegebene, übereinstimmende Uhrzeit als Sendeuhrzeit gespeichert wird, zu welcher der Sender das Laufzeitmesssignal aussendet.

4. Verfahren nach einem der Ansprüche 1 bis 3, **dadurch gekennzeichnet, dass** das Laufzeitmesssignal mit einer Signalausbreitungsgeschwindigkeit von < 500 m/s, vorzugsweise < 400 m/s, insbesondere über Schallwellen ausgesendet wird.

5. Verfahren nach einem der Ansprüche 1 bis 4, **dadurch gekennzeichnet, dass** das Synchronisierungssignal bzw. das Referenzsignal mit einer Signalausbreitungsgeschwindigkeit von > 100.000 km/s, insbesondere über elektromagnetische Wellen oder mittels induktiver oder kapazitiver Datenübertragung übermittelt wird.

6. Verfahren nach einem der Ansprüche 1 bis 5, **dadurch gekennzeichnet, dass** das Laufzeitmesssignal, das Synchronisierungssignal und/oder das Referenzsignal als Trägersignal mit einer vorbestimmten Frequenz übermittelt wird.

7. Verfahren nach einem der Ansprüche 1 bis 6, **dadurch gekennzeichnet, dass** das Laufzeitmesssignal als Trägersignal mit aufmodulierten Daten, wie z.B. Identifikationsdaten, Ereignisdaten und/oder Batteriestatusdaten, übermittelt wird.

8. Verfahren zur Zutrittskontrolle insbesondere in Gebäuden, bei dem eine bidirektionale Datenübermittlung zwischen einem Identmedium und einer Zutrittskontrollvorrichtung stattfindet, um die Zutrittsberechtigung des Identmediums in Bezug auf die Zutrittskontrollvorrichtung zu überprüfen, wobei in Abhängigkeit von der festgestellten Zutrittsberechtigung der Zutritt freigegeben oder gesperrt wird, **dadurch gekennzeichnet, dass** die räumliche Entfernung zwischen der Zutrittskontrollvorrichtung und dem Identmedium mit einem Verfahren nach einem der Ansprüche 1 bis 7 ermittelt und mit einem vorgegebenen Grenzwert verglichen wird und der Zutritt nur dann freigegeben wird, wenn die ermittelte räumliche Entfernung unter dem Grenzwert liegt.

9. Verfahren nach Anspruch 8, **dadurch gekennzeichnet, dass** die Datenübermittlung die Übermittlung von Identifikationsdaten vom Identmedium an die Zutrittskontrollvorrichtung umfasst, wobei die Identifikationsdaten in der Zutrittskontrollvorrichtung zur Feststellung der Zutrittsberechtigung ausgewertet werden.

10. Verfahren nach Anspruch 8 oder 9, **dadurch gekennzeichnet, dass** die Datenübermittlung die Durchführung eines vorgegebenen Authentifizierungs- und/oder Identifizierungsprotokolls umfasst, um die Gültigkeit der Kommunikationspartner und die Zutrittsberechtigung des Identmediums zu überprüfen.

11. Vorrichtung zur Durchführung des Verfahrens nach einem der Ansprüche 1 bis 10, umfassend eine Zutrittskontrollvorrichtung und ein Identmedium, die jeweils eine Sende-/Empfangseinrichtung aufweisen, um eine bidirektionale Datenübermittlung zwischen dem Identmedium und der Zutrittskontrollvorrichtung zu ermöglichen, wobei das Identmedium einen Speicher für Identifikationsdaten aufweist, der vorzugsweise mit der Sende-/Empfangseinrichtung des Identmediums zur Durchführung eines Authentifizierungs- und/oder Identifizierungsprotokolls zusammenwirkt, wobei die Zutrittskontrollvorrichtung eine Auswerteschaltung zur Feststellung der Zutrittsberechtigung vorzugsweise auf Grund des Authentifizierungs- und/oder Identifizierungsprotokolls aufweist, um den Zutritt wahlweise freizugeben oder zu sperren, wobei die Zutrittskontrollvorrichtung und/oder das Identmedium jeweils eine Uhreneinheit und eine Steuerschaltung aufweist, wobei die Steuerschaltung der Zutrittskontrollvorrichtung oder des Identmediums (Sender) ausgebildet ist, um mit der zugeordneten Sende-/Empfangseinrichtung zusammenzuwirken, um ein Laufzeitmesssignal an die Sende-/Empfangseinrichtung der anderen Einrichtung (Empfänger) zu übermitteln, und die Steuerschaltung des Empfängers ausgebildet ist, um mit der zugeordneten Sende-/Empfangseinrichtung und der Uhreneinheit zusammenzuwirken, um die Uhrzeit des Empfangs des Laufzeitmesssignals zu erfassen und eine Rechenschaltung umfasst, um aus der Empfangsuhrzeit und einer Referenzzeit eine Signallaufzeit zu errechnen und aus der Signallaufzeit unter Berücksichtigung einer Signalausbreitungsgeschwindigkeit des Laufzeitmesssignals die räumlichen Entfernung zwischen der Zutrittskontrollvorrichtung und dem Identmedium zu errechnen, **dadurch gekennzeichnet, dass** entweder
- Uhreneinheiten im Sender und im Empfänger ausgebildet sind, um mit Synchronisierungsmitteln zum Synchronisieren der Uhreneinheiten zusammenzuwirken und dass die Uhrzeit des Aussendens des Laufzeitmesssignals der Rechenschaltung als Referenzzeit zugeführt ist, wobei die Synchronisierungsmittel zur Übermittelung eines Synchronisierungssignals zwischen der Zutrittskontrollvorrichtung und dem Identmedium ausgebildet sind, oder
- die Steuerschaltung des Senders ausgebildet ist, um mit der Sende-/Empfangseinrichtung zusammenzuwirken, um das Laufzeitmesssignal und ein Referenzsignal gleichzeitig oder in einem vorbestimmten Zeitabstand auszusenden, wobei die Rechenschaltung des Empfängers ausgebildet ist, um die Empfangszeit des Referenzsignals im Empfänger als Referenzzeit heranzuziehen,
und dass die Sende-/Empfangseinrichtung des Senders ausgebildet ist, um das Synchronisierungssignal bzw. das Referenzsignal mit einer Signalausbreitungsgeschwindigkeit zu senden, die mindestens dem 100-fachen, vorzugsweise mindestens dem 1000-fachen der Signalausbreitungsgeschwindigkeit des Laufzeitmesssignals entspricht, wobei die Sende-/Empfangseinrichtung des Senders ausgebildet ist, um das Synchronisierungssignal bzw. das Referenzsignal als Trägersignal mit aufmodulierten Daten, wie z.B. Identifikationsdaten, Ereignisdaten und/oder Batteriestatusdaten, zu übermitteln.

12. Vorrichtung nach Anspruch 11, **dadurch gekennzeichnet, dass** die Steuerschaltung ausgebildet ist, um mit der Auswerteschaltung der Zutrittskontrollvorrichtung zusammenzuwirken, um die ermittelte räumliche Entfernung mit einem vorgegebenen Grenzwert zu vergleichen und den Zutritt nur dann freizugeben, wenn die ermittelte räumliche Entfernung unter dem Grenzwert liegt.

13. Vorrichtung nach Anspruch 11, oder 12, **dadurch gekennzeichnet, dass** die Steuerschaltung ausgebildet ist, um mit der Uhreneinheit und der Sende-/Empfangseinrichtung des Senders zusammenzuwirken, um die Sendeuhrzeit vom Sender zum Empfänger zu übermitteln.

14. Vorrichtung nach einem der Ansprüche 11 oder 12, **dadurch gekennzeichnet, dass** die Steuerschaltung des Senders und des Empfängers jeweils einen Speicher umfasst, um im Sender und im Empfänger wenigstens eine vorgegebene, übereinstimmende Uhrzeit als Sendeuhrzeit zu speichern, und die Steuerschaltung ausgebildet ist, um mit der Sende-/Empfangseinrichtung zusammenzuwirken, um das Laufzeitmesssignal zu der gespeicherten Sendeuhrzeit auszusenden.

15. Vorrichtung nach einem der Ansprüche 11 bis 14, **dadurch gekennzeichnet, dass** die Sende-/Empfangseinrichtung des Senders ausgebildet ist, um das Laufzeitmesssignal mit einer Signalausbreitungsgeschwindigkeit von < 500 m/s, vorzugsweise < 400 m/s, insbesondere über Schallwellen auszusenden.

16. Vorrichtung nach einem der Ansprüche 11 bis 15, **dadurch gekennzeichnet, dass** die Sende-/Empfangseinrichtung des Senders ausgebildet ist, um das Synchronisierungssignal bzw. das Referenzsignal mit einer Signalausbreitungsgeschwindigkeit von > 100.000 km/s, insbesondere über elektromagnetische Wellen oder mittels induktiver oder kapazitiver Datenübertragung zu übermitteln.

## Claims

1. A method for determining the spatial distance between an access control device and an identification medium, comprising the steps of
- emitting a transfer time measurement signal by the access control device or the identification medium (transmitter),
- receiving the transfer time measurement signal in the respectively other device (receiver),
- detecting the time of the reception of the transfer time measurement signal,
- calculating a signal transfer time from the reception time and a reference time,
- determining the spatial distance from the signal transfer time under consideration of a signal propagation speed of the transfer time measurement signal,
**characterized in that** either
- clocks in the transmitter and in the receiver are synchronized, and that the time of emitting the transfer time measurement signal is used as a reference time, wherein synchronizing comprises transmitting a synchronization signal between the access control device and the identification medium, or
- the receiver transmits the transfer time measurement signal and a reference signal simultaneously or at a predetermined time interval, and the reception time of the reference signal is used in the receiver as a reference time,
and that the synchronization signal or the reference signal, respectively, is transmitted at a signal propagation speed corresponding to at least one hundred times, preferably at least one thousand times, the signal propagation speed of the transfer time measurement signal, wherein the synchronization signal or the reference signal, respectively, is transmitted as a carrier signal with data such as identification data, event data and/or battery status data modulated thereon.

2. A method according to claim 1, **characterized in that** the transmission time is transmitted from the transmitter to the receiver.

3. A method according to claim 1, **characterized in that** at least one corresponding default time is stored in the transmitter and in the receiver as the transmission time at which the transmitter emits the transfer time measurement signal.

4. A method according to any one of claims 1 to 3, **characterized in that** the transfer time measurement signal is emitted at a signal propagation speed of <500 m/s, preferably <400 m/s, in particular via sound waves.

5. A method according to any one of claims 1 to 4, **characterized in that** the synchronization signal and/or the reference signal is transmitted at a signal propagation speed of >100,000 km/s, in particular via electromagnetic waves or by means of inductive or capacitive data transmission.

6. A method according to any one of claims 1 to 5, **characterized in that** the transfer time measurement signal, the synchronization signal and/or the reference signal are transmitted as carrier signals at a predetermined frequency.

7. A method according to any one of claims 1 to 6, **characterized in that** the transfer time measurement signal is transmitted as a carrier signal with data such as identification data, event data and/or battery status data modulated thereon.

8. A method for access control, in particular in buildings, in which a bidirectional data transmission takes place between an identification medium and an access control device to check the access authorization of the identification medium in respect to the access control device, access being released or blocked as a function of the determined access authorization, **characterized in that** the spatial distance between the access control device and the identification medium is determined using a method according to any one of claims 1 to 7 and compared to a default limit value, and the access is authorized only when the determined spatial distance is below the limit value.

9. A method according to claim 8, **characterized in that** the data transmission comprises transmitting identification data from the identification medium to the access control device, wherein the identification data are evaluated in the access control device for determining the access authorization.

10. A method according to claim 8 or 9, **characterized in that** the data transmission comprises performing a default authorization and/or identification protocol to check the validity of the communication partners and the access authorization of the identification medium.

11. A device for carrying out the method according to any one of claims 1 to 10, comprising an access control device and an identification medium, each of which comprises a transceiver device for enabling bidirectional data transmission between the identification medium and the access control device, wherein the identification medium comprises a memory for identification data preferably cooperating with the transceiver device of the identification medium for performing an authentication and/or identification protocol, wherein the access control device comprises an evaluation circuit for determining the access authorization preferably based on the authentication and/or identification protocol to alternatively release or block the access, wherein the access control device and/or the identification medium each comprises a clock unit and a control circuit, the control circuit of the access control device or the identification medium (transmitter) being arranged to cooperate with the associated transceiver device for transmitting a transfer time measurement signal to the transceiver device of the other device (receiver) and the control circuit of the receiver being arranged to cooperate with the associated transceiver device and the clock unit for detecting the time of the reception of the transfer time measurement signal, and an arithmetic circuit for calculating a signal transfer time from the reception time and a reference time, and for calculating the spatial distance between the access control device and the identification medium from the signal transfer time under consideration of a signal propagation speed of the transfer time measurement signal, **characterized in that** either
- clock units are arranged in the transmitter and in the receiver to cooperate with synchronization means for synchronizing the clock units, and that the time of emitting the transfer time measurement signal is fed to the arithmetic circuit as a reference time, wherein the synchronization means are arranged to transmit a synchronization signal between the access control device and the identification medium, or
- the control circuit of the transmitter is arranged to cooperate with the transceiver device for transmitting the transfer time measurement signal and a reference signal simultaneously or at a predetermined time interval, wherein the arithmetic circuit of the receiver is arranged to use the reception time of the reference signal in the receiver as a reference time,
and that the transceiver device of the transmitter is arranged to transmit the synchronization signal or the reference signal, respectively, at a signal propagation speed corresponding to at least one hundred times, preferably at least one thousand times, the signal propagation speed of the transfer time measurement signal, wherein the transceiver device of the transmitter is arranged to transmit the synchronization signal or the reference signal, respectively, as a carrier signal with data such as identification data, event data and/or battery status data modulated thereon.

12. A device according to claim 11, **characterized in that** the control circuit is arranged to cooperate with the evaluation circuit of the access control device to compare the determined spatial distance to a default limit value and authorize the access only when the determined spatial distance is below the limit value.

13. A device according to claim 11 or 12, **characterized in that** the control circuit is arranged to cooperate with the clock unit and the transceiver device of the transmitter for transmitting the transmission time from the transmitter to the receiver.

14. A device according to any one of claim 11 or 12, **characterized in that** the control circuit of the transmitter and of the receiver each comprises a memory to store at least one corresponding default time as transmission time in the transmitter and in the receiver, and the control circuit is arranged to cooperate with the transceiver device for transmitting the transfer time measurement signal at the stored transmission time.

15. A device according to any one of claims 11 to 14, **characterized in that** the transceiver device of the transmitter is arranged to emit the transfer time measurement signal at a signal propagation speed of <500 m/s, preferably <400 m/s, in particular via sound waves.

16. A device according to any one of claims 11 to 15, **characterized in that** the transceiver device of the transmitter is arranged to transmit the synchronization signal and/or the reference signal at a signal propagation speed of >100,000 km/s, in particular via electromagnetic waves or by means of inductive or capacitive data transmission.

## Revendications

1. Procédé de détermination de la distance spatiale entre un dispositif de contrôle d'accès et un support d'identification comprenant les étapes consistant à
- envoyer un signal de mesure de temps de propagation par l'intermédiaire du dispositif de contrôle d'accès ou le support d'identification (émetteur),
- recevoir le signal de mesure de temps de propagation dans l'autre dispositif (récepteur),
- détecter l'heure de réception du signal de mesure de temps de propagation,
- calculer un temps de propagation du signal à partir de l'heure de réception et d'un temps de référence,
- déterminer la distance spatiale par rapport au temps de propagation du signal en tenant compte d'une vitesse de propagation de signal du signal de mesure de temps de propagation
**caractérisé en ce que** soit
- les horloges dans l'émetteur et dans le récepteur sont synchronisées et l'heure d'émission du signal de mesure de temps de propagation est utilisée comme heure de référence, la synchronisation comprenant la transmission d'un signal de synchronisation entre le dispositif de contrôle d'accès et le support d'identification, soit
- l'émetteur envoie le signal de mesure de temps de propagation et un signal de référence simultanément ou à un intervalle de temps prédéterminé et le temps de réception du signal de référence dans le récepteur est utilisé comme temps de référence,
et le signal de synchronisation ou le signal de référence est envoyé à une vitesse de propagation de signal qui est au moins 100 fois, de préférence au moins 1000 fois la vitesse de propagation de signal du signal de mesure de temps de propagation, le signal de synchronisation ou le signal de référence étant transmis en tant que signal porteur avec des données modulées, par ex. des données d'identification, des données d'événement et/ou des données d'état de batterie.

2. Procédé selon la revendication 1, **caractérisé en ce que** l'heure d'émission est transmise de l'émetteur au récepteur.

3. Procédé selon la revendication 1, **caractérisé en ce qu'**au moins une heure coïncidente prédéterminée est enregistrée dans l'émetteur et dans le récepteur comme heure d'émission à laquelle l'émetteur envoie le signal de mesure de temps de propagation.

4. Procédé selon l'une quelconque des revendications 1 à 3, **caractérisé en ce que** le signal de mesure de temps de propagation est émis à une vitesse de propagation de signal < 500 m/s, de préférence < 400 m/s, en particulier par ondes sonores.

5. Procédé selon l'une quelconque des revendications 1 à 4, **caractérisé en ce que** le signal de synchronisation ou le signal de référence est transmis à une vitesse de propagation de signal > 100 000 km/s, en particulier par ondes électromagnétiques ou par transmission de données inductive ou capacitive.

6. Procédé selon l'une quelconque des revendications 1 à 5, **caractérisé en ce que** le signal de mesure de temps de propagation, le signal de synchronisation et/ou le signal de référence est transmis en tant que signal porteur avec une fréquence prédéterminée.

7. Procédé selon l'une quelconque des revendications 1 à 6, **caractérisé en ce que** le signal de mesure de temps de propagation est transmis en tant que signal porteur avec des données modulées, par ex. des données d'identification, des données d'événement et/ou des données d'état de batterie.

8. Procédé de contrôle d'accès, en particulier dans des bâtiments, dans lequel une transmission de données bidirectionnelle a lieu entre un support d'identification et un dispositif de contrôle d'accès pour vérifier l'autorisation d'accès du support d'identification par rapport au dispositif de contrôle d'accès, l'accès étant autorisé ou interdit en fonction de l'autorisation d'accès déterminée, **caractérisé en ce que** la distance spatiale entre le dispositif de contrôle d'accès et le support d'identification est déterminée avec un procédé selon l'une quelconque des revendications 1 à 7 et comparée à une valeur limite prédéterminée et l'accès n'est autorisé que si la distance spatiale déterminée est inférieure à la valeur limite.

9. Procédé selon la revendication 8, **caractérisé en ce que** la transmission de données comprend la transmission de données d'identification du support d'identification au dispositif de contrôle d'accès, les données d'identification étant évaluées dans le dispositif de contrôle d'accès pour déterminer l'autorisation d'accès.

10. Procédé selon la revendication 8 ou 9, **caractérisé en ce que** la transmission de données comprend la mise en œuvre d'un protocole d'authentification et/ou d'identification prédéterminé pour vérifier la validité des partenaires de communication et l'autorisation d'accès du support d'identification.

11. Dispositif pour la mise en oeuvre du procédé selon l'une quelconque des revendications 1 à 10, comprenant un dispositif de contrôle d'accès et un support d'identification, chacun présentant un dispositif d'émission/de réception pour permettre une transmission de données bidirectionnelle entre le support d'identification et le dispositif de contrôle d'accès, le support d'identification présentant une mémoire pour données d'identification qui coopère de préférence avec le dispositif d'émission/de réception du support d'identification pour mettre en œuvre un protocole d'authentification et/ou d'identification, le dispositif de contrôle d'accès présentant un circuit d'évaluation pour déterminer l'autorisation d'accès, de préférence sur la base du protocole d'authentification et/ou d'identification, afin d'autoriser ou d'interdire l'accès de manière sélective, le dispositif de contrôle d'accès et/ou le support d'identification présentant chacun une unité d'horloge et un circuit de commande, dans lequel le circuit de commande du dispositif de contrôle d'accès ou du support d'identification (émetteur) est conçu pour coopérer avec le dispositif d'émission/de réception associé pour transmettre un signal de mesure de temps de propagation au dispositif d'émission/de réception de l'autre dispositif (récepteur), et le circuit de commande du récepteur est conçu pour coopérer avec le dispositif d'émission/de réception associé et l'unité d'horloge pour détecter l'heure de réception du signal de mesure de temps de propagation et comprend un circuit de calcul pour calculer un temps de propagation de signal à partir de l'heure de réception et d'un temps de référence et pour calculer la distance spatiale entre le dispositif de contrôle d'accès et le support d'identification à partir du temps de propagation de signal en tenant compte d'une vitesse de propagation de signal du signal de mesure de temps de propagation, **caractérisé en ce que** soit
- les unités d'horloge dans l'émetteur et dans le récepteur sont conçues pour coopérer avec des moyens de synchronisation pour la synchronisation des unités d'horloge et que l'heure de l'émission du signal de mesure de temps de propagation est fournie au circuit de calcul comme temps de référence, les moyens de synchronisation étant conçus pour transmettre un signal de synchronisation entre le dispositif de contrôle d'accès et le support d'identification, soit
- le circuit de commande de l'émetteur est conçu pour coopérer avec le dispositif d'émission/de réception pour transmettre le signal de mesure de temps de propagation et un signal de référence simultanément ou à un intervalle de temps prédéterminé, le circuit de calcul du récepteur étant conçu pour utiliser le temps de réception du signal de référence dans le récepteur comme temps de référence,
et que le dispositif d'émission/de réception de l'émetteur est conçu pour envoyer le signal de synchronisation ou le signal de référence à une vitesse de propagation de signal qui est au moins 100 fois, de préférence au moins 1000 fois la vitesse de propagation de signal du signal de mesure de temps de propagation, le dispositif d'émission/de réception de l'émetteur étant conçu pour transmettre le signal de synchronisation ou le signal de référence en tant que signal porteur avec des données modulées, par ex. des données d'identification, des données d'événements et/ou des données d'état de batterie.

12. Dispositif selon la revendication 11, **caractérisé en ce que** le circuit de commande est conçu pour coopérer avec le circuit d'évaluation du dispositif de contrôle d'accès pour comparer la distance spatiale déterminée avec une valeur limite prédéterminée et permettre l'accès uniquement si la distance spatiale déterminée est inférieure à la valeur limite.

13. Appareil selon la revendication 11, ou 12, **caractérisé en ce que** le circuit de commande est conçu pour coopérer avec l'unité d'horloge et le dispositif d'émission/de réception de l'émetteur pour transmettre l'heure d'émission de l'émetteur au récepteur.

14. Dispositif selon l'une quelconque des revendications 11 ou 12, **caractérisé en ce que** le circuit de commande de l'émetteur et du récepteur comprend chacun une mémoire pour enregistrer dans l'émetteur et dans le récepteur au moins une heure coïncidente prédéterminée comme heure d'émission, et le circuit de commande est conçu pour coopérer avec le dispositif d'émission/de réception pour transmettre le signal de mesure de temps de propagation à l'heure d'émission enregistrée.

15. Dispositif selon l'une quelconque des revendications 11 à 14, **caractérisé en ce que** le dispositif d'émission/de réception de l'émetteur est conçu pour émettre le signal de mesure de temps de propagation à une vitesse de propagation de signal < 500 m/s, de préférence < 400 m/s, en particulier par l'intermédiaire d'ondes sonores.

16. Dispositif selon l'une quelconque des revendications 11 à 15, **caractérisé en ce que** le dispositif d'émission/de réception de l'émetteur est conçu pour transmettre le signal de synchronisation ou le signal de référence à une vitesse de propagation de signal > 100 000 km/s, en particulier par l'intermédiaire d'ondes électromagnétiques ou au moyen d'une transmission de données inductive ou capacitive.
